# DEMANDE DE BREVET EUROPEEN

(11) **EP 4 667 390 A1**
(43) Date de publication de la demande: **24.12.2025**
(21) Numéro de dépôt: 25184035.1
(22) Date de dépôt: 19.06.2025
(51) Int. Cl.: B65G 15/42, B65G 17/32, B65G 17/44, B65G 65/00

(54) **SYSTÈME DE CONVOYAGE ET PROCÉDÉ METTANT EN OEUVRE UN TEL SYSTÈME**

(30) Priorité: 21.06.2024 FR 2406695
(71) Demandeur: Velec Systems, 59150 Wattrelos (FR)
(72) Inventeur: LEQUERTIER, Rémy, 59150 WATTRELOS (FR); DEFRANCE, Marie-Noëlle, 59150 WATTRELOS (FR); GHESTEM, FLORIAN, 59150 WATTRELOS (FR)
(74) Mandataire: Plasseraud IP

(57) **Abrégé**

Système de convoyage pour produits longilignes, tels que des saucisses, comprenant un premier convoyeur présentant:
- au moins une bande convoyeuse (2) présentant une face interne et une face externe, et des roues de guidage pour ladite au moins une bande convoyeuse configurées pour engager avec la face interne de ladite au moins une bande convoyeuse,
- au moins un support (4), comprenant un logement s'étendant en longueur configuré pour la réception d'un produit longiligne,
- des moyens de fixation dudit au moins un support (4) à ladite au moins une bande convoyeuse (2), assurant la fixation dudit au moins un support, localement, selon une direction transversale à ladite bande convoyeuse comportant des couples rainure d'accroche et nervure d'accroche (Na).

## Description

La présente divulgation est relative à un système de convoyage pour produits longilignes, tels que des saucisses, comprenant au moins une bande convoyeuse, et un ou plusieurs supports formant respectivement un ou plusieurs logements pour des produits longilignes, le logement ou les logements s'étendant transversalement à la direction d'avance de ladite au moins une bande convoyeuse.

La présente divulgation concerne plus particulièrement au moins un tel système de convoyage, qui comprend plusieurs groupes de supports, à savoir au moins un premier groupe de premiers supports, et un deuxième groupe de deuxièmes supports, entrainés respectivement par un premier couple de bande convoyeuses, et un deuxième couple de bandes convoyeuses, les bandes convoyeuses du premier couple et celle du deuxième couple pouvant être entrainées indépendamment.

La présente divulgation trouve une application particulière dans le domaine alimentaire requérant un haut niveau d'hygiène et de nettoyabilité. A titre indicatif, les produits longilignes pouvant être des saucisses.

La présente divulgation est encore relative à un procédé de convoyage de produits alimentaires, mettant en œuvre le système de convoyage selon la présente divulgation, en particulier servant de tampon entre une ligne automatisée à flux continu de produits longilignes, et un poste automatisé de mise en emballage fonctionnant en discontinu, tel que par exemple une thermoformeuse.

La présente divulgation concerne encore un procédé de nettoyage d'un système de convoyage selon la présente divulgation.

### Domaine technique

La présente divulgation relève du domaine des système de convoyage comprenant une ou plusieurs bandes convoyeuses, et plusieurs logements pour des produits longilignes, s'étendant parallèlement les uns un aux autres par rapport à la direction d'avance du convoyeur en des positions maitrisées sur la ou les bandes convoyeuses, et qui est typiquement connu sous l'appellation de *« convoyeur piano »* par la personne du métier.

Un tel convoyeur permet de maitriser les positionnements des produits longilignes, suivant la direction d'avance de de la surface de convoyage, les produits étant logés individuellement en les positions des logements.

### Technique antérieure

Il est ainsi connu de l'état de la technique un système de convoyage pour lequel les différents logements individuels sont formés par des supports constitués comme des éléments distincts de bandes convoyeuses, et qui sont fixés sur des surfaces externes des bandes convoyeuses.

Pour ce faire, des organes de fixation, typiquement des boulons viennent traverser simultanément le support et les bandes convoyeuses suivant leur épaisseur.

Selon les constatations des inventeurs, un premier défaut d'une telle solution de fixation est que les organes de fixation, à savoir les boulons, lorsque mal montés, peuvent être saillants de la face interne de guidage de la bande destinée à engager avec des roues de guidage, et être ainsi à l'origine de perturbation de guidage. Un deuxième défaut d'une telle solution est qu'elle nécessite le perçage de la bande convoyeuse, et est ainsi à l'origine d'interstice au niveau des perçages, à savoir entre le boulon et la bande, interstices où l'humidité peut être piégée et favoriser le développement de pathogènes.

Selon les constatations des inventeurs, un tel état de la technique peut être amélioré, en particulier s'agissant de la nettoyabilité ou de l'hygiène et en particulier dans les applications dans le domaine alimentaire.

### Résumé

La présente divulgation vient améliorer la situation.

Il est proposé, selon un **premier aspect,** un système de convoyage pour produits longilignes, tels que des saucisses, comprenant un premier convoyeur présentant:
- au moins une bande convoyeuse présentant une face interne et une face externe, et des roues de guidage pour ladite au moins une bande convoyeuse configurées pour engager avec la face interne de ladite au moins une bande convoyeuse,
- au moins un support, comprenant un logement s'étendant en longueur configuré pour la réception d'un produit longiligne,
- des moyens de fixation dudit au moins un support à ladite au moins une bande convoyeuse, assurant la fixation dudit au moins un support, orienté localement, selon une direction transversale à ladite bande convoyeuse.

Selon la présente divulgation, lesdits moyens de fixation comprennent :
- une rainure d'accroche dudit au moins un support présentant au moins une extrémité longitudinale ouverte, s'étendant longitudinalement au support,
- une nervure d'accroche, solidaire de la face externe de ladite au moins une bande convoyeuse, s'étendant transversalement à la direction locale de ladite au moins une bande, autorisant la fixation dudit au moins un support à ladite bande convoyeuse par une insertion de la nervure d'accroche dans ladite rainure d'accroche par ladite extrémité longitudinale ouverte, et en enfilant la nervure jusqu'à une position de verrouillage de la nervure d'accroche dans la rainure d'accroche assurant la fixation du au moins un support sur ladite au moins une bande,
- des moyens de butée, assurant un blocage de la nervure d'accroche dans la rainure d'accroche dans la position de verrouillage en interdisant le coulissement de la nervure d'accroche le long de la nervure d'accroche.

Les caractéristiques exposées dans les paragraphes suivants peuvent, optionnellement, être mises en œuvre, indépendamment les unes des autres ou en combinaison les unes avec les autres.

Selon un mode de réalisation, les moyens de butée sont configurés pour être déplacés manuellement par un opérateur, depuis une position assurant le verrouillage dudit au moins un support sur ladite au moins une bande convoyeuse, et jusqu'à une position d'échappement des moyens de butées libérant le coulissement, autorisant la désolidarisation dudit au moins un support de ladite bande convoyeuse par extraction en coulissement de la nervure d'accroche de la rainure d'accroche.

En particulier, et selon un mode de réalisation :
- ledit au moins support comprend, au moins un premier support, voire des premiers supports et au moins un deuxième support, voire des deuxièmes supports, voire au moins un troisième support, voire des troisièmes supports
- ladite au moins une bande convoyeuse comprend :
   -- un premier couple de bandes convoyeuses sur lesquelles est fixé le ou chaque premier support, par des premières nervures d'accroche, des bandes convoyeuses du premier couple de bandes, enfilées dans la rainure d'accroche du premier support
- un deuxième couple de bandes convoyeuses sur lesquelles est fixé le ou chaque deuxième support par des deuxièmes nervures d'accroche des bandes convoyeuse du deuxième couple de bandes, enfilées dans la rainure d'accroche du deuxième support,
- voire un troisième couple de bandes convoyeuses sur lesquelles est fixé le ou chaque troisième support, par des troisièmes nervures d'accroche des bandes convoyeuse du troisième couple de bandes, enfilées dans la rainure d'accroche du troisième support, et
et dans lequel ledit premier convoyeur présente un mécanisme d'entrainement comprenant :
- des premières roues de guidage configurées pour le guidage et l'entrainement des bandes convoyeuses du premier couple de bandes convoyeuses,
- des deuxièmes roues de guidage configurées pour le guidage et l'entrainement des bandes convoyeuses du deuxièmes couple de bandes convoyeuses,
- voire, en présence du troisième couple de bandes convoyeuse, des troisièmes roues de guidage configurées pour le guidage et l'entrainement des bandes convoyeur du troisième couple de bandes convoyeuses,
et de sorte que le mécanisme d'entrainement est configuré pour assurer sélectivement un déplacement du ou des premiers supports, indépendamment des deuxièmes supports, ou encore un déplacement du ou des deuxièmes supports, indépendamment des premiers supports, voire le cas échéant en présence du troisième couple de bandes convoyeuse, un déplacement du ou des troisièmes supports, indépendamment du ou des premiers supports et indépendamment du ou des deuxièmes supports.

Selon un mode de réalisation les moyens de butée comprennent :
- pour le ou chaque premier support, des butées saillantes d'une face du premier support comprenant la rainure d'accroche, les butées saillantes configurées pour engager avec les chants longitudinaux d'au moins une bande appartenant aux bandes du deuxième couple de bandes convoyeuses, voire appartenant aux bandes du troisième couple de bandes convoyeuses,
- pour le ou chaque deuxième support, de butées saillantes d'une face du deuxième support comprenant la rainure d'accroche, les butées saillantes configurées pour engager avec les chants longitudinaux d'au moins une bande appartenant aux bandes du premier couple de bandes convoyeuses, voire aux bandes du troisième couple de bandes convoyeuses,
- le cas échéant, pour le ou chaque troisième support, de butées saillantes d'une face du troisième support comprenant la rainure d'accroche, les butées saillantes configurées pour engager avec les chants longitudinaux d'au moins une bande appartenant aux bandes du premier couple de bandes convoyeuses, voire aux bandes du deuxième couple de bandes convoyeuses.

De préférence la rainure d'accroche présente ladite extrémité longitudinale ouverte, l'extrémité longitudinale opposée de la rainure d'accroche étant une extrémité longitudinale fermée.

Selon un mode de réalisation ledit au moins un support comprend une base, une première aile et une deuxième aile, s'étendant en saillie de la base, ladite base s'étendant en largeur suivant une direction locale de ladite au moins une bande convoyeuse, et en longueur transversalement à ladite au moins une bande convoyeuse, ladite rainure d'accroche formée dans ladite base longitudinalement à ladite base débouchant sur une surface inférieure de la base, la première aile et la deuxième aile saillantes de la surface supérieure de le base de sorte à former un logement de section en U pour le produit longiligne.

Selon un mode de réalisation, ledit au moins un support comprenant la base y compris la rainure d'accroche, la première aile et la deuxième aile, en particulier premier support, deuxième support, voire troisième support, est un élément d'un seul tenant.

Selon un mode de réalisation, ladite au moins une bande convoyeuse s'étend sur une longueur utile entre une zone de chargement de produits dans le ou les logements dudit au moins un support, et une zone de déchargement, distante de la zone de chargement, ladite au moins une bande convoyeuse configurée pour assurer un déplacement dudit au moins un support de la zone de chargement jusqu'à la zone déchargement.

Selon un mode de réalisation, ladite au moins une bande convoyeuse appartient au premier convoyeur configuré pour assurer le déplacement dudit au moins support selon une première direction, et lequel ladite zone de déchargement, comprend un dispositif de déchargement comprenant un deuxième convoyeur configuré pour assurer le déplacement des produits selon une deuxième direction, transversale à la première direction, depuis le ou les logements dudit au moins un support jusqu'à un ou plusieurs canaux, en prolongement dudit au moins un support.

Selon un mode de réalisation, ladite au moins une nervure d'accroche, en particulier les premières nervures d'accroche, deuxièmes nervures d'accroche, voire troisièmes nervures d'accroche, est fixée à ladite au moins une bande par soudure ou collage, de la nervure d'accroche sur la face externe de ladite au moins une bande convoyeuse. De préférence, ladite au moins une nervure d'accroche, en particulier les premières nervures d'accroche, deuxièmes nervures d'accroche, voire troisièmes nervures d'accroche, est fixée à ladite au moins une bande convoyeuse, sans perçage de ladite au moins une bande convoyeuse et dudit au moins un support, en particulier lesdits moyens de fixation dudit au moins un support à ladite au moins une bande convoyeuse est dépourvu de d'organe de fixation tel que vis traversant ladite au moins une bande convoyeuse ,ladite au moins une nervure, ou encore ladite au moins un support.

Selon un mode de réalisation, ladite au moins une bande convoyeuse, en particulier le premier couple de bandes convoyeuses, le deuxième couple de bandes convoyeuses, voire le troisième couple de bandes convoyeuses du système, et ladite nervure d'accroche sont en polyuréthane, dépourvues de concavité, formant une zone de rétention d'eau.

Selon un deuxième aspect, la présente divulgation est relative à un procédé de convoyage de produits, mettant en œuvre un système de convoyage selon la présente divulgation et dans lequel les produits sont des produits alimentaires tels que des saucisses.

Selon un mode de réalisation du procédé de convoyage, mettant en œuvre ledit système de convoyage comprenant qui est intercalé entre :
- une ligne de convoyage assurant une arrivée de produits longilignes alimentant la zone de chargement du système de convoyage en continu avec lesdits produits longilignes, d'un part, et
- un poste automatisé de mise en emballage des produits longilignes, tel qu'une thermoformeuse, fonctionnement en discontinu, d'autre part,
et dans lequel un automatisme du système de convoyage assure une commande des premiers supports, deuxième supports, voire troisièmes supports de manière indépendante afin d'assurer une alimentation du poste automatisé de mise en emballage, en flux discontinu de produits longilignes en sortie de la zone de déchargement, à partir du flux continu de ladite ligne de convoyage alimentant la zone de chargement.

La présente divulgation concerne encore, selon un troisième aspect, un procédé de nettoyage d'un système de convoyage selon la présente divulgation comprenant :
- un démontage sans outil dudit au moins un support, par déplacement manuel des moyens de butées dans ladite position d'échappement et désolidarisation dudit au moins un support de ladite au moins une bande convoyeuse par extraction en coulissement de la nervure d'accroche de la rainure d'accroche,
- un nettoyage dudit au moins un support et de ladite au moins une bande convoyeuse dans l'état démonté dudit au moins un support et de ladite au moins une bande convoyeuse.

### Brève description des dessins

D'autres caractéristiques, détails et avantages apparaîtront à la lecture de la description détaillée ci-après, et à l'analyse des dessins annexés, sur lesquels :
**Fig. 1**

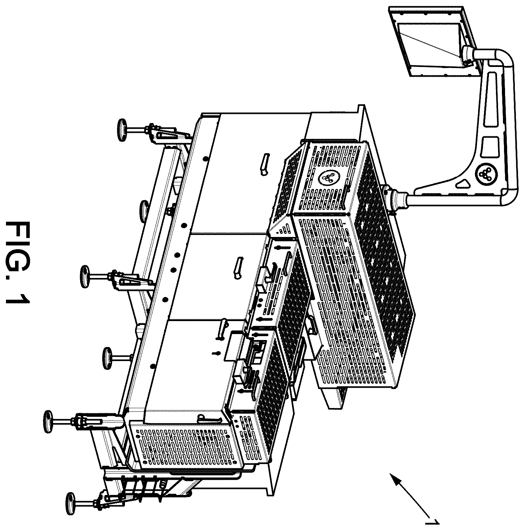

   [Fig. 1] est vue en perspective d'un système de convoyage selon la présente divulgation, comprenant un premier convoyeur et un deuxième convoyeur agencé au niveau d'une zone de déchargement du premier convoyeur, le premier convoyeur et le deuxième convoyeur entièrement recouverts par deux carters.
**Fig. 2**

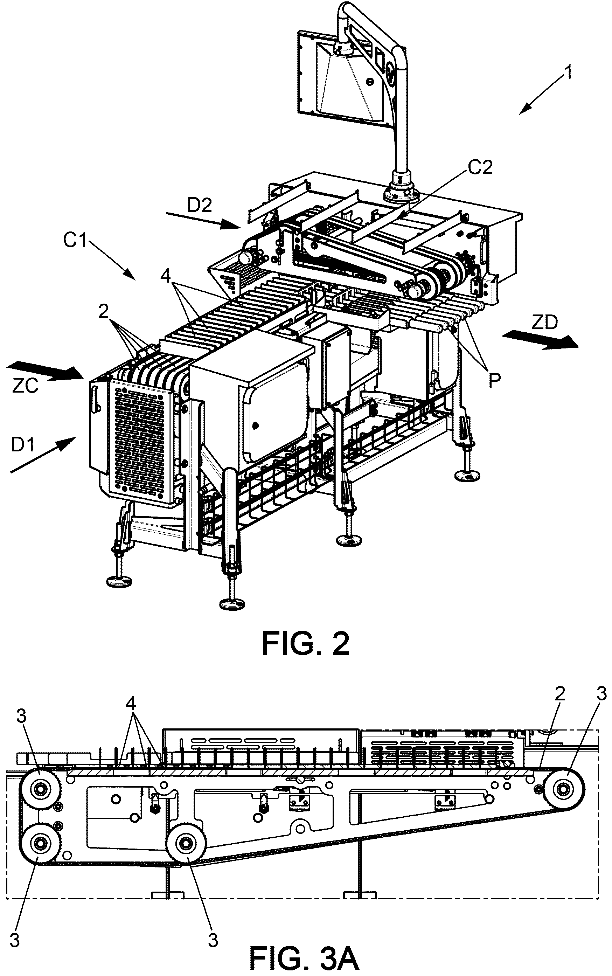

   [Fig. 2] est vue en perspective du système de convoyage selon la figure 1, vue selon un autre angle, le carter du premier convoyeur et le carter du deuxième convoyeur étant retirés, la vue illustrant un flux de produits longilignes, en parallèle, au niveau de la zone de déchargement, le deuxième convoyeur, à bandes, étant agencé supérieur, orienté suivant une deuxième direction, le deuxième convoyeur à cheval entre la zone de chargement du premier convoyeur, des canaux de guidage des produits s'étendant transversalement au premier convoyeur, alignés avec des logements des supports du premier convoyeur, une zone de chargement du premier convoyeur, étant distante de la zone de déchargement, le premier convoyeur configuré pour transférer les produits contenus dans les logements des supports du premier convoyeur jusqu'à la zone de déchargement, par déplacement des supports suivant une première direction du premier convoyeur, perpendiculaire à la deuxième direction.
**Fig. 3A**
   [Fig. 3A] est une vue de coupe passant par un plan vertical s'étendant suivant la première direction, illustrant les bandes convoyeuses en parallèle, sous forme de boucles fermées, et les roues de guidage venant en prise avec une surface interne des bandes convoyeuses pour assurer le guidage et l'entraînement des bandes convoyeuses, le brin supérieur des bandes supportant une pluralité de supports formant respectivement des logements individuels pour les produits longilignes.
**Fig. 3B**

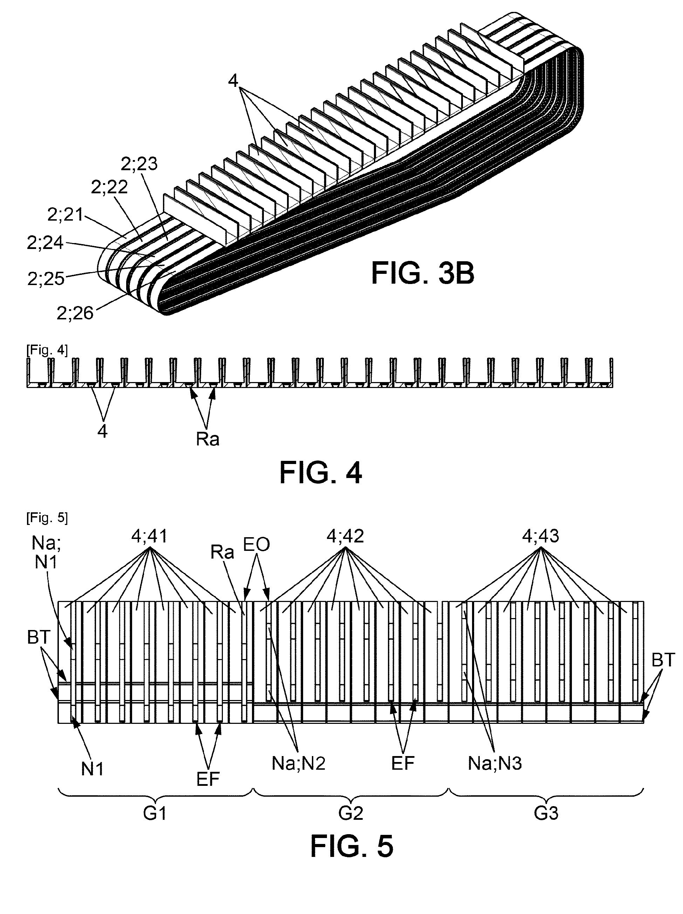

   [Fig. 3B] est une vue en perspective des bandes convoyeuses en parallèles, au nombre de six, un premier couple de bandes convoyeuses supportant un premier groupe de supports, dit premiers supports, un deuxième couple de bandes convoyeuses supportant un deuxième groupe de supports, dits deuxièmes supports, un troisième couple de bandes convoyeuses supportant un troisième groupe de supports, dit troisièmes supports.
**Fig. 4**
   [Fig. 4] est une vue des différents supports des trois différents groupes, disposés parallèles entre eux, les différents supports présentant chacun une base, une rainure d'accroche débouchant par une entrée de gorge d'une face inférieure de la base, et deux ailes, à savoir une première aile et une deuxième aile saillante de la base de la face supérieure de ladite base.
**Fig. 5**
   [Fig. 5] est une vue de dessous de la figure 4, illustrant pour chacun des différents supports du premier groupe, deuxième groupe, et troisième groupe, de manière notable :
   - la rainure d'accroche,
   - les différentes positions des deux nervures d'accroche à l'intérieure de la rainure d'accroche, à savoir respectivement pour les premiers supports du premier groupe, les deuxièmes supports du deuxième groupe, et les troisièmes supports du troisième groupe,
   - les positions des butées saillantes, sous la face inférieure du support, configurées pour interdire le coulissement des nervures d'accroche le long des rainures d'accroche.
**Fig. 6**

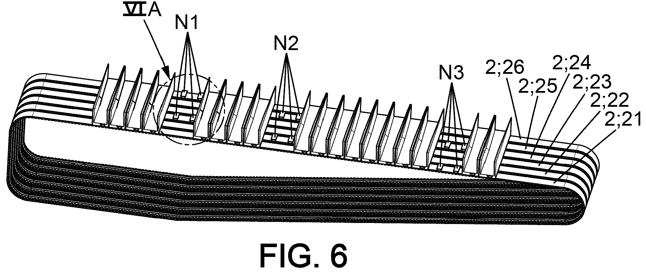

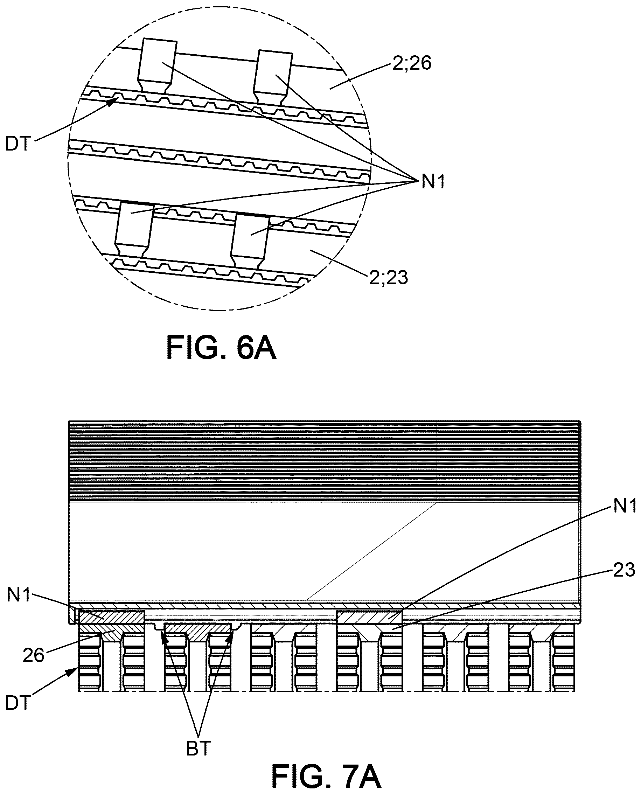

   [Fig. 6] est une vue en perspective des bandes convoyeuses et des supports, certains des supports du premier groupe, du deuxième groupe et du troisième groupe étant cachés afin d'illustrer les différentes positions :
   - des premières nervures solidaires d'une troisième et sixième bande pour solidariser les premiers supports,
   -.des deuxièmes nervures solidaires d'une deuxième et cinquième bande pour solidariser les deuxièmes supports,
   - des troisièmes nervures solidaire d'une première et quatrième bande pour solidariser les troisièmes supports,
   et dans laquelle la figure 6 illustre un vue additionnelle de détail des premiers supports.
**Fig. 6A**
   [FIG. 6A] est une vue de détail de la figure 6.
**Fig. 7A**

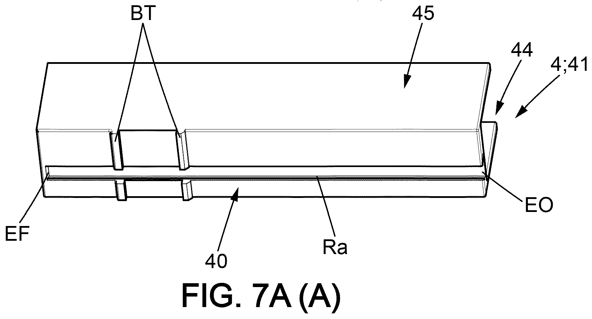

   [Fig. 7A] illustre une vue de coupe illustrant la coopération des butées saillantes avec les chants de la cinquième bande, ainsi que les premières nervures solidaires de la troisième bande et de la sixième bande.
**FIG. 7AA**
   [Fig. 7AA] une vue de détail du dessous du premier support.
**Fig. 7B**

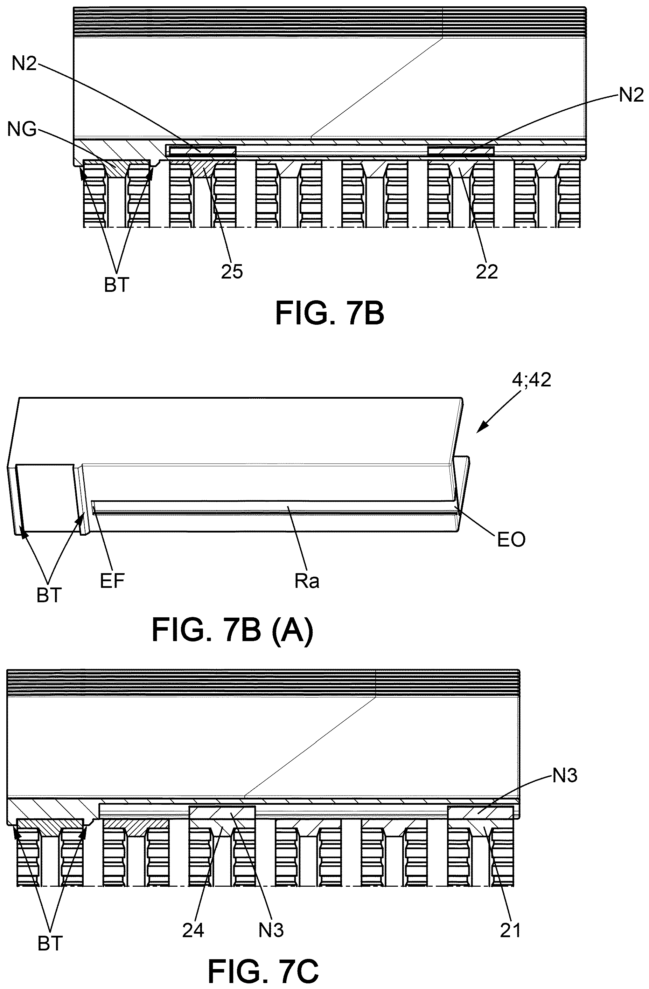

   [Fig. 7B] illustre une vue de coupe illustrant la coopération des butées saillantes avec les chants de la sixième bande, ainsi que les deuxièmes nervures solidaires de la deuxième bande et de la cinquième bande.
**FIG. 7BA**
   [FIG. 7BA] est une vue de détail du dessous du deuxième support.
**Fig. 7C**

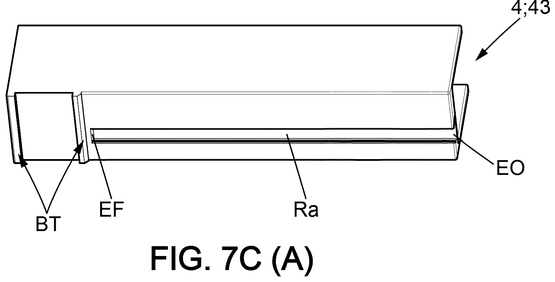

   [Fig. 7C] illustre une vue de coupe illustrant la coopération des butées saillantes avec les chants de la sixième bande, ainsi que les troisièmes nervures solidaires de la première bande et de la quatrième bande.
**FIG. 7CA**
   [FIG. 7CA] est une vue de détail du dessous du troisième support.

### Description des modes de réalisation

La présente divulgation est relative à un système de convoyage 1 pour produits longilignes, tels que des saucisses, comprenant au moins un premier convoyeur présentant :
- au moins une bande convoyeuse 2 présentant une face interne et une face externe, et des roues de guidage 3 pour ladite au moins une bande convoyeuse configurées pour engager avec la face interne de ladite au moins une bande convoyeuse,
- au moins un support 4, comprenant un logement s'étendant en longueur configuré pour la réception d'un produit longiligne,
- des moyens de fixation dudit au moins un support 4 à ladite au moins une bande convoyeuse 2, assurant la fixation dudit au moins un support, orienté localement, selon une direction transversale à ladite bande convoyeuse.

De manière générale, ladite au moins bande convoyeuse peut former une boucle de section fermée. Tout ou partie des roues de guidage peut être motorisée pour assurer l'entrainement de ladite bande convoyeuse 2. A cet effet, au moins la ou les roues motorisées peuvent présenter une ou des dentures DT configurées pour engrener avec une ou des dentures sur la face interne de ladite au moins une bande convoyeuse.

La face interne de ladite au moins une bande convoyeuse 2 peut comporter une nervure de guidage NG, saillante longitudinalement à ladite au moins une bande convoyeuse 2, configurée pour pénétrer une gorge de guidage, périphérique de la roue de guidage. La coopération entre la nervure de guidage et la gorge de guidage assure un maintien latéral et un guidage de ladite au moins une bande sur la roue de guidage.

Ladite au moins une bande convoyeuse peut comprendre une unique bande convoyeuse (mode de réalisation non illustré), et ledit au moins un support 4 peut comprendre typiquement plusieurs supports 4 solidaires de ladite unique bande convoyeuse. Les différents logements des supports 4 s'étendent parallèles les uns aux autres, et forment typiquement des logements individuels pour les produits longilignes. L'unique bande convoyeuse forme une boucle fermée, et est guidée en plusieurs positions avec les roues de guidage 3. Au moins certaines roues de guidage sont motorisées et comporte les dentures précitées.

Selon un autre mode de réalisation (illustré), ladite au moins une bande convoyeuse 2 peut comprendre plusieurs bandes convoyeuses 21 à 26, parallèles entre elles. Les différents supports 4 peuvent être solidarisés respectivement à différentes bandes convoyeuses 21 à 26 de sorte à former plusieurs groupes de supports G1, G2, G3, mobiles indépendamment les uns par rapport aux autres. A cet effet, les bandes convoyeuses 21, 22, 23, 24 ,25, 26 associées aux différents groupes de supports G1 peuvent être entrainées indépendamment les unes des autres par des roues de guidage motorisées.

Selon la présente divulgation, lesdits moyens de fixation comprennent :
- une rainure d'accroche Ra dudit au moins un support 4 présentant au moins une extrémité longitudinale ouverte EO, s'étendant longitudinalement au support,
- une nervure d'accroche Na, solidaire de la face externe de ladite au moins une bande convoyeuse 2, s'étendant transversalement à la direction (longitudinale) locale de ladite au moins une bande.

La nervure d'accroche Na autorise la fixation dudit au moins un support 4 à ladite bande convoyeuse par une insertion de la nervure d'accroche dans ladite rainure d'accroche Ra par ladite extrémité longitudinale ouverte EO, et en enfilant la nervure d'accroche Na jusqu'à une position de verrouillage de la nervure d'accroche dans la rainure d'accroche assurant la fixation du au moins un support sur ladite au moins une bande.

Par nervure d'accroche Na et rainure d'accroche Ra, on entend un couple nervure d'accroche/rainure d'accroche, de profils tels qu'une fois enfilée dans la rainure d'accroche, la nervure d'accroche ne peut être extraite par l'entrée de la rainure d'accroche, longitudinale à ladite rainure d'accroche ; à savoir que le nervure d'accroche peut seulement s'extraire par l'extrémité longitudinale ouverte EO, en faisant coulisser la nervure le long de la rainure.

Comme illustré aux figures, le couple nervure d'accroche/rainure d'accroche peut présenter une configuration en queue d'aronde : la nervure d'accroche peut présenter un profilé en trapèze comprenant une petite base du trapèze solidaire de la face externe de ladite bande, et une brande base du trapèze formant une extrémité libre de la nervure. La rainure d'accroche peut comporter alors un profilé complémentaire en trapèze.

D'autres profils de nervure d'accroche/rainure d'accroche peuvent être envisagés, tels qu'une section en T, interdisant une extraction par l'entrée de rainure, longitudinale à la rainure d'accroche Ra.

Le système de convoyage comporte encore de préférence des moyens de butée BT, assurant un blocage de la nervure d'accroche Na dans la rainure d'accroche Ra dans la position de verrouillage en interdisant le coulissement de la nervure d'accroche Na le long de la nervure d'accroche Ra. On assure ainsi un verrouillage dudit au moins un support 4 à ladite au moins une bande convoyeuse 2 qui ne peut être extrait par l'extrémité longitudinale ouverte EO de la rainure Ra.

Les moyens de butée BT peuvent être déplacés de préférence manuellement par un opérateur, depuis une position, typiquement stable, assurant le verrouillage dudit au moins un support 4, et jusqu'à une position d'échappement des moyens de butées libérant le coulissement, autorisant le démontage dudit au moins un support 4 de la nervure d'accroche Na. On entend par déplacement des moyens de butée, un déplacement relatif des moyens de butée par rapport à une partie engageant avec les moyens de butées ; telle que ladite au moins une bande, à savoir que l'opérateur peut agir soit sur les moyens butée, soit sur la partie telle que la bande pour obtenir la position d'échappement.

Selon la présente divulgation, ladite au moins une nervure d'accroche Na, est fixée à ladite au moins une bande convoyeuse, sans perçage de ladite au moins une bande convoyeuse 2 et dudit au moins un support 4.

En particulier, lesdits moyens de fixation dudit au moins un support 4 à ladite au moins une bande convoyeuse 2 est dépourvu de d'organe de fixation tel que vis traversant ladite au moins une bande convoyeuse 2, ladite au moins une nervure Na, ou encore ladite au moins un support 4.

Selon un mode de réalisation (non illustré), l'extrémité longitudinale opposée à l'extrémité longitudinale ouverte EO peut être une deuxième extrémité ouverte, ou encore une extrémité longitudinale fermée EF (mode de réalisation illustré). Présenter une extrémité longitudinale fermée EF peut être avantageux pour éviter les erreurs de montage lorsque ledit support 4 présente un sens de montage.

Selon un mode de réalisation, ledit au moins un support 4 peut comprendre une base 40, une première aile 44 et une deuxième aile 45, s'étendant en saillie de la base.

Ladite base 40 s'étend en largeur suivant la direction locale de ladite au moins une bande convoyeuse 2, et en longueur transversalement à ladite au moins une bande convoyeuse 2, ladite rainure d'accroche Ra formée dans ladite base longitudinalement à ladite base débouchant sur une surface inférieure de la base, la première aile 44 et la deuxième aile 45 saillantes de la surface supérieure de la base de sorte à former le logement de section en U pour le produit longiligne.

Les parois latérales internes de la première aile 44 et de la deuxième aile 45, peuvent être divergentes sur une première section de longueur du support 4, et afin d'assurer un guidage des produits dans le logement, lors d'une insertion du produit au travers d'une extrémité ouverte du logement.

Ledit au moins un support comprenant la base 40, y compris la rainure d'accroche Ra, la première aile 44 et la deuxième aile 45 en particulier premier support, deuxième support, voire troisième support, peut être un élément d'un seul tenant. Le support peut être fabriqué par moulage, par exemple d'une matière plastique.

Selon un mode de réalisation, les différents supports 4 peuvent comprendre plusieurs groupes G1, G2, G3 de supports, indépendamment déplaçables, les uns par rapport aux autres.

Ainsi, ledit au moins support 4 peut comprendre, au moins un premier support 41, voire plusieurs premiers supports 41 et au moins un deuxième support 4, voire plusieurs deuxièmes supports 42, voire au moins un troisième support 43, voire plusieurs troisièmes supports 43.

Ladite au moins une bande convoyeuse peut comprendre :
-- un premier couple de bandes convoyeuses sur lesquelles est fixé le (ou chaque) premier support 41, par des premières nervures d'accroche N1 des bandes convoyeuses 23, 26 du premier couple de bandes, enfilées dans la rainure d'accroche Ra du premier support 41
   - un deuxième couple de bandes convoyeuses sur lesquelles est fixé le (ou chaque) deuxième support 42 par des deuxièmes nervures d'accroche N2 des bandes convoyeuse 22, 25 du deuxième couple de bandes, enfilées dans la rainure d'accroche Ra du deuxième support 42,
   - voire un troisième couple de bandes convoyeuses sur lesquelles est fixé le ou (chaque) troisième support 43, par des troisièmes nervures d'accroche N3 des bandes convoyeuse 21, 24 du troisième couple de bandes, enfilées dans la rainure d'accroche Ra du troisième support 43.

Selon un mode de réalisation, le premier groupe G1 comporte plusieurs premiers supports 41, par exemple huit (8) premiers supports 41, le deuxième groupe G2 comporte plusieurs deuxièmes supports 42, par exemple huit (8) deuxièmes supports 42, et le troisième groupe G3 comporte plusieurs troisièmes supports 43, par exemple huit (8) troisièmes supports 43.

Ladite au moins une bande convoyeuse 2 comporte alors six bandes convoyeuses en parallèle, à savoir respectivement une première bande convoyeuse 21, une deuxième bande convoyeuse 22, une troisième bande convoyeuse 23, une quatrième bande convoyeuse 24, une cinquième bande convoyeuse 25 et une sixième bande convoyeuse 26.

Chaque premier support 41 est accroché sur deux premières nervures 41, solidaire respectivement de deux des bandes des convoyeuses, par exemple à la troisième bande convoyeuse 23 et la sixième bande convoyeuse 26 (voir figure 7A).

Chaque deuxième support 42 est accroché sur deux deuxièmes nervures 42, solidaires respectivement de deux des bandes convoyeuses, par exemple à la deuxième bande 22 et à la cinquième bande 25 (Voir figure 7B).

Chaque troisième support 43 est accroché sur deux troisièmes nervures 43, solidaires respectivement de deux des bandes convoyeuses, par exemple à la deuxième bande 42, par exemple à la première bande 21 et à la quatrième bande 24 (Voir figure 7B).

Ledit système de convoyage peut comprendre un mécanisme d'entraînement comprenant :
- des premiers roues de guidage configurées pour le guidage et l'entrainement des bandes convoyeuses 23, 26 du premier couple de bandes convoyeuses,
- des deuxièmes roues de guidage configurées pour le guidage et l'entrainement des bandes convoyeuses 22, 25 du deuxièmes couple de bandes convoyeuses,
- voire, en présence du troisième couple de bandes convoyeuse, des troisièmes roues de guidage configurées pour le guidage et l'entrainement des bandes convoyeur du troisième couple de bandes convoyeuses.

Le mécanisme d'entrainement est configuré pour assurer sélectivement un déplacement du ou des premiers supports 41, indépendamment du ou des deuxièmes supports (voire indépendamment du ou des troisième supports 43 si présents), ou encore un déplacement du ou des deuxièmes supports 42, indépendamment du ou des premiers supports (voire du ou des troisièmes support si présents), voire le cas échéant en présence du troisième couple de bandes convoyeuse, un déplacement du ou des troisièmes supports 43, indépendamment des premiers supports ou deuxièmes supports.

Selon un mode de réalisation, les moyens de butée BT peuvent comprendre :
- pour le ou chaque premier support 41, des butées saillantes d'une face du premier support 41 comprenant la rainure d'accroche Ra, les butées saillantes configurées pour engager avec les chants longitudinaux d'au moins une bande appartenant aux bandes 22, 25 du deuxième couple de bandes convoyeuses, voire appartenant aux bandes 21, 24 du troisième couple de bandes convoyeuses,
- pour le ou chaque deuxième support 42, des butées saillantes d'une face du deuxième support comprenant la rainure d'accroche, les butées saillantes configurées pour engager avec les chants longitudinaux d'au moins une bande appartenant aux bandes du premier couple de bandes convoyeuses, voire aux bandes du troisième couple de bandes convoyeuses,
- pour le ou chaque troisième support 43, des butées saillantes d'une face du troisième support comprenant la rainure d'accroche, les butées saillantes configurées pour engager avec les chants longitudinaux d'au moins une bande appartenant aux bandes du premier couple de bandes convoyeuses, voire aux bandes du deuxième couple de bandes convoyeuses.

Par exemple, à la figure 7A, les moyens de butée des premiers supports 41 comprennent deux butées saillantes sur la surface inférieure de base qui viennent respectivement en butée avec les deux chants longitudinaux de la cinquième bande 25.

A la figure 7B, les moyens de butée des deuxièmes supports 42 comprennent deux butées saillantes sur la surface intérieure de la base qui viennent respectivement en butée avec les deux chants longitudinaux de la sixième bande 26.

A la figure 7C, les moyens de butée des troisièmes supports 43 comprennent deux butées saillantes sur la surface intérieure de la base qui viennent respectivement en butée avec les deux chants longitudinaux de la sixième bande 26.

Lors de la fixation d'un support, à savoir lors du montage, il suffit pour un opérateur d'enfiler les deux nervures d'accroche Na du couple de bandes convoyeuses dans la rainure d'accroche du support 4 à fixer (notamment premier support 41, deuxième support 42 ou troisième support 43) par insertion des nervures au travers de l'extrémité longitudinale ouverte EO, et de coulisser les nervures jusqu'à la position de verrouillage, en pressant légèrement vers le bas la bande convoyeuse (ou les bandes) destinée à venir en butée avec les butées saillantes pour assurer la fixation avec verrouillage de la position du support, puis de relâcher la pression pour les chants de bande se verrouillent sur les butées saillants du support. Lors du démontage, à l'inverse une pression sur la bande convoyeuse en contact avec les butées saillantes permet de faire échapper les butées saillantes des chants de la bande convoyeuse, autorisant le coulissement du support jusqu'à obtenir son démontage par extraction des nervures d'accroche de la rainure d'accroche. Le montage et le démontage des supports 4 sur ladite au moins une bande convoyeuse 2 peuvent être opérés, rapidement et simplement, avantageusement sans outil.

Les opérations de montage et de démontage sont particulièrement aisées, de préférence obtenues sans outils.

Selon un mode de réalisation, ladite au moins une bande convoyeuse s'étend sur une longueur utile entre une zone de chargement ZC, de produits dans le ou les logements dudit au moins un support, et une zone de déchargement ZD, distante, ladite au moins une bande convoyeuse 2 configurée pour assurer un déplacement dudit au moins un support 4 de la zone de chargement ZC jusqu'à la zone déchargement ZD.

De manière générale, et tel qu'illustrée, la zone de chargement ZC s'étend sur une première section de longueur de ladite au moins une bande convoyeuse 2, au niveau d'une première extrémité du premier convoyeur, et alors que la zone de déchargement ZD s'étend, sur une deuxième section de longueur de la bande convoyeuse 2, au niveau d'une deuxième extrémité de ladite au moins une bande convoyeuse 2.

Ladite au moins une bande convoyeuse 2, y compris le cas échéant les différentes bandes convoyeuses 21 à 26 appartient à un premier convoyeur C1 configuré pour assurer le déplacement dudit au moins support selon une première direction D1.

Selon un mode de réalisation, ladite zone de déchargement ZD comprend un dispositif de chargement comprenant un deuxième convoyeur C2 configuré pour assurer le déplacement des produits longilignes P selon une deuxième direction D2 transversale à la première direction D1, depuis le ou les logements dudit au moins un support 4 jusqu'à un ou plusieurs canaux en prolongement.

Des guides comportant les canaux, sont prévus latéralement à la zone de déchargement ZC pour assurer le guidage individuel des produits longilignes en parallèle les uns des autres. Le deuxième convoyeur C2 peut être un convoyeur à bandes, qui est orienté suivant la deuxième direction D2, disposé supérieur à cheval au-dessus la zone de déchargement ZD du premier convoyeur C1 et des canaux assurant le guidage des produits longilignes.

Les bandes convoyeuses du deuxième convoyeur C2 sont espacés suivant l'espacement des canaux de guidage, et viennent engager avec les surfaces supérieures des produits longilignes pour assurer l'entrainement des produits longilignes, reposant dans les logements des différents supports 4 et jusqu'à des canaux respectivement en prolongement des logements des différentes supports 4 du premier convoyeur, les canaux alignés avec les logements des supports.

Lors du chargement, les différents supports 4 en cours de chargement appartenant à un même groupe (par exemple du premier groupe G1, ou du deuxième groupe, voire du troisième groupe) sont déplacés typiquement pas à pas, suivant l'espacement entre deux logements deux supports consécutifs afin d'être chargés typiquement individuellement, les uns après les autres en produits longilignes à partir d'une file de produits longilignes défilant en continu. Les supports 4 d'un autre groupe (par exemple du deuxième groupe G2), ayant préalablement fait l'objet d'un chargement peuvent être déplacés jusqu'à la zone de déchargement ZD en temps masqué du chargement des premiers supports 41 du premier groupe G1.

Les supports d'encore un autre groupe (par exemple du troisième groupe G3) peuvent être déchargés au niveau de la zone de déchargement ZD, et avant d'être déplacés de nouveau jusqu'à la zone de chargement ZC, en temps masqué du chargement. Le deuxième convoyeur C2 peut permettre de décharger les supports du groupe simultanément, grâce à ces différentes bandes convoyeuses.

De préférence, ladite au moins une nervure d'accroche Na, en particulier chacune des premières nervures d'accroche N1, des deuxièmes nervures d'accroche N2, voire des troisièmes nervures d'accroche Na), est fixée à ladite au moins une bande 2 par soudure ou collage de la nervure d'accroche Na sur la face externe de ladite au moins une bande convoyeuse.

De préférence, ladite au moins une nervure d'accroche Na, en particulier chacune des premières nervures d'accroche N1, des deuxièmes nervures d'accroche N2, voire des troisièmes nervures d'accroche, est fixée à ladite au moins une bande convoyeuse, sans perçage de ladite au moins une bande convoyeuse 2 et dudit au moins un support.

### Application industrielle

Le système de convoyage par son mode de fixation dudit au moins un support 4 à ladite au moins bande convoyeuse 2 permet avantageusement de fixer le ou les supports 4 à la ou les bandes 2, de préférence sans perçage de ces dernières, en particulier par des organes de fixation.

Le nettoyage des supports 4 et des bandes en est facilité et l'hygiène en est améliorée par rapport à l'état technique présenté, qui présente des perçages de la bande donnant naissance à des interstices susceptibles de piéger l'humidité.

De préférence, la mise en place des supports 4 sur les bandes 21 à 26 peut au moins selon un mode de réalisation être réalisé sans outil, facilitant les opérations de montage et de démontage.

La présente divulgation concerne encore un procédé de convoyage de produits, mettant en œuvre un système de convoyage selon la présente divulgation dans lequel les produits sont des produits alimentaires tels que des saucisses.

Selon un mode de réalisation du procédé, ledit système de convoyage peut être est intercalé entre :
- une ligne de convoyage assurant une arrivée de produits longilignes alimentant la zone de chargement du système de convoyage, de préférence lesdits produits longilignes en défilements continu, en file les uns à la suite des autres, d'une part, et
- un poste automatisé de mise en emballage des produits longilignes, fonctionnement en discontinu, tel que thermoformeuse, d'autre part.

Avantageusement un automatisme du système de convoyage permet d'assurer une commande, des premiers supports 41, des deuxièmes supports 42, voire des troisièmes supports de manière indépendante, afin d'assurer une alimentation du poste automatisé de mise en emballage, en flux discontinu de produits longilignes en sortie de la zone de déchargement, à partir du flux continu de ladite ligne de convoyage arrivant au niveau de la zone de chargement.

La présente divulgation est encore relative à un procédé de nettoyage d'un système de convoyage selon la présente divulgation, comprenant :
- un démontage sans outil dudit au moins un support 4, (en particulier des premiers supports, des deuxièmes supports, et troisièmes supports), par déplacement manuel des moyens de butées dans ladite position d'échappement et désolidarisation dudit au moins un support 4 de ladite au moins une bande convoyeuse 2 par extraction en coulissement de la nervure d'accroche Na de la rainure d'accroche Ra
- un nettoyage dudit au moins un support 4 ((en particulier des premiers supports, des deuxièmes supports, et troisièmes supports), et de ladite au moins une bande convoyeuse 2 dans l'état démonté dudit au moins un support 4 et de ladite au moins une bande convoyeuse 2.

Ladite au moins une bande convoyeuse 2, en particulier le premier couple de bandes convoyeuses, le deuxième couple de bandes convoyeuses, voire le troisième couple de bandes convoyeuses du système, et ladite nervure d'accroche Na peuvent être en polyuréthane, dépourvues de concavité, formant une zone de rétention d'eau.

A intervalle régulier, après chaque campagne de production, le système de convoyage selon la présente divulgation peut être désassemblé pour assurer un haut degré de nettoyage, et de manière aisée, avantageusement sans outil.

### Liste des signes de référence

- 1 : Système de convoyage,
- C1 premier convoyeur,
- D1. Première direction (premier convoyeur)
- 2. Au moins une bande convoyeuse,
- 21, 22, 23, 24, 25, 26. Première, deuxième, troisième, quatrième, cinquième et sixième bandes convoyeuses
- 3. Roue de guidage,
- DT. Dentures (appartenant à la roue de guidage ou à la face interne de ladite bande convoyeuse),
- 4. Au moins un support,
- 40. Base,
- 44, 45. Première aile et deuxième aile,
- G1. Premier groupe (de supports)
- 41. Premiers supports (appartenant au premier groupe),
- G2. Deuxième groupe (de supports),
- 42. Deuxièmes supports (appartenant au deuxième groupe),
- G3. Troisième groupe (de supports)
- 43. Troisièmes supports (appartenant au troisième groupe),
- Ra. Rainures d'accroche,
- EO, EF. Respectivement extrémité longitudinale ouverte et extrémité longitudinale fermée
- Na. Nervures d'accroche,
- N1. Premières nervures d'accroche (solidaires des bandes du premier couple de bandes convoyeuses et assurant la fixation des premiers supports),
- N2. Deuxièmes nervures d'accroche (solidaires des bandes du deuxième couple de bandes convoyeuses et assurant la fixation des deuxièmes supports),
- N3. Troisièmes nervures d'accroche (solidaire des bandes du troisième couple de bandes convoyeuses,
- ZC. Zone de chargement,
- ZD. Zone de déchargement,
- C2. Deuxième convoyeur.

## Revendications

1. Système de convoyage (1) pour produits longilignes, tels que des saucisses, comprenant un premier convoyeur (C1) présentant:
- au moins une bande convoyeuse (2) présentant une face interne et une face externe, et des roues de guidage (3) pour ladite au moins une bande convoyeuse configurées pour engager avec la face interne de ladite au moins une bande convoyeuse,
- au moins un support (4), comprenant un logement s'étendant en longueur configuré pour la réception d'un produit longiligne,
- des moyens de fixation dudit au moins un support (4) à ladite au moins une bande convoyeuse (2), assurant la fixation dudit au moins un support, orienté localement, selon une direction transversale à ladite bande convoyeuse
lesdits moyens de fixation comprenant :
- une rainure d'accroche (Ra) dudit au moins un support présentant au moins une extrémité longitudinale ouverte (EO), s'étendant longitudinalement au support,
- une nervure d'accroche (Na), solidaire de la face externe de ladite au moins une bande convoyeuse (2), s'étendant transversalement à la direction locale de ladite au moins une bande, autorisant la fixation dudit au moins un support à ladite bande convoyeuse par une insertion de la nervure d'accroche dans ladite rainure d'accroche par ladite extrémité longitudinale ouverte, et en enfilant la nervure jusqu'à une position de verrouillage de la nervure d'accroche dans la rainure d'accroche assurant la fixation du au moins un support sur ladite au moins une bande,
- des moyens de butée (BT), assurant un blocage de la nervure d'accroche dans la rainure d'accroche dans la position de verrouillage en interdisant le coulissement de la nervure d'accroche le long de la nervure d'accroche,
et dans lequel :
- ledit au moins support (4) comprend, au moins un premier support (41), voire des premiers supports (41) et au moins un deuxième support (42), voire des deuxièmes supports (42), voire au moins un troisième support (43), voire des troisièmes supports (43)
- ladite au moins une bande convoyeuse comprend :
-- un premier couple de bandes convoyeuses sur lesquelles est fixé le ou chaque premier support (41), par des premières nervures d'accroche (N1) des bandes convoyeuses (23, 26) du premier couple de bandes, enfilées dans la rainure d'accroche (R1) du premier support (41)
-- un deuxième couple de bandes convoyeuses sur lesquelles est fixé le ou chaque deuxième support (42) par des deuxièmes nervures d'accroche (N2) des bandes convoyeuse (22, 25) du deuxième couple de bandes, enfilées dans la rainure d'accroche (Ra) du deuxième support (42),
-- voire un troisième couple de bandes convoyeuses sur lesquelles est fixé le ou chaque troisième support (43), par des troisièmes nervures d'accroche (N3) des bandes convoyeuse (21, 24) du troisième couple de bandes, enfilées dans la rainure d'accroche (Ra) du troisième support (43), et dans lequel ledit premier convoyeur (C1) présente un mécanisme d'entrainement comprenant :
- des premières roues de guidage configurées pour le guidage et l'entrainement des bandes convoyeuses (23, 26) du premier couple de bandes convoyeuses,
- des deuxièmes roues de guidage configurées pour le guidage et l'entrainement des bandes convoyeuses (22, 25) du deuxièmes couple de bandes convoyeuses,
- voire, en présence du troisième couple de bandes convoyeuse, des troisièmes roues de guidage configurées pour le guidage et l'entrainement des bandes convoyeur du troisième couple de bandes convoyeuses,
et de sorte que le mécanisme d'entrainement est configuré pour assurer sélectivement un déplacement du ou des premiers supports (41), indépendamment des deuxièmes supports (42), ou encore un déplacement du ou des deuxièmes supports (42), indépendamment des premiers supports (41), voire le cas échéant en présence du troisième couple de bandes convoyeuse, un déplacement du ou des troisièmes supports (43), indépendamment du ou des premiers supports (41) et indépendamment du ou des deuxièmes supports (42).

2. Système selon la revendication 1 dans lequel les moyens de butée (BT) sont configurés pour être déplacés manuellement par un opérateur, depuis une position assurant le verrouillage dudit au moins un support (4) sur ladite au moins une bande convoyeuse (2), et jusqu'à une position d'échappement des moyens de butées libérant le coulissement, autorisant la désolidarisation dudit au moins un support (4) de ladite bande convoyeuse par extraction en coulissement de la nervure d'accroche (Na) de la rainure d'accroche (Ra).

3. Système de convoyage selon la revendication 2, dans lequel les moyens de butée (BT) comprennent :
- pour le ou chaque premier support (41), des butées saillantes d'une face du premier support (41) comprenant la rainure d'accroche (Ra), les butées saillantes configurées pour engager avec les chants longitudinaux d'au moins une bande appartenant aux bandes (22, 25) du deuxième couple de bandes convoyeuses, voire appartenant aux bandes (21, 24) du troisième couple de bandes convoyeuses,
- pour le ou chaque deuxième support (42), des butées saillantes d'une face du deuxième support comprenant la rainure d'accroche, les butées saillantes configurées pour engager avec les chants longitudinaux d'au moins une bande appartenant aux bandes du premier couple de bandes convoyeuses, voire aux bandes du troisième couple de bandes convoyeuses,
- le cas échéant, pour le ou chaque troisième support (43), des butées saillantes d'une face du troisième support comprenant la rainure d'accroche, les butées saillantes configurées pour engager avec les chants longitudinaux d'au moins une bande appartenant aux bandes du premier couple de bandes convoyeuses, voire aux bandes du deuxième couple de bandes convoyeuses.

4. Système de convoyage selon l'une des revendications 1 à 3, dans lequel la rainure d'accroche (Ra) présente ladite extrémité longitudinale ouverte (EO), l'extrémité longitudinale opposée de la rainure d'accroche étant une extrémité longitudinale fermée (EF).

5. Système de convoyage selon l'une des revendications 1 à 4, dans lequel ledit au moins un support (4) comprend une base (40), une première aile (44) et une deuxième aile (45), s'étendant en saillie de la base, ladite base (40) s'étendant en largeur suivant la direction locale de ladite au moins une bande convoyeuse (2), et en longueur transversalement à ladite au moins une bande convoyeuse (2), ladite rainure d'accroche (Ra) formée dans ladite base longitudinalement à ladite base débouchant sur une surface inférieure de la base, la première aile (44) et la deuxième aile (45) saillantes de la surface supérieure de le base de sorte à former un logement de section en U pour le produit.

6. Système selon la revendication 5, dans lequel ledit au moins un support comprenant la base (40) y compris la rainure d'accroche (Ra), la première aile (44) et la deuxième aile (45) en particulier premier support, deuxième support, voire troisième support, est un élément d'un seul tenant.

7. Système de convoyage selon l'une des revendications 1 à 6, dans lequel ladite au moins une bande convoyeuse s'étend sur une longueur utile entre une zone de chargement (ZC), de produits dans le ou les logements dudit au moins un support, et une zone de déchargement (ZD), distante, ladite au moins une bande convoyeuse (2) configurée pour assurer un déplacement dudit au moins un support (4) de la zone de chargement (ZC) jusqu'à la zone déchargement (ZD).

8. Système de convoyage selon la revendication 7, dans lequel ladite au moins une bande convoyeuse (2) appartient au premier convoyeur (C1) configuré pour assurer le déplacement dudit au moins support selon une première direction (D1), et lequel ladite zone de déchargement, comprend un dispositif de déchargement comprenant un deuxième convoyeur (C2) configuré pour assurer le déplacement des produits selon une deuxième direction (D2) transversale à la première direction (D1), depuis le ou les logements dudit au moins un support jusqu'à un ou plusieurs canaux, en prolongement dudit au moins un support (4).

9. Système de convoyage selon l'une des revendications 1 à 8, dans lequel ladite au moins une nervure d'accroche (Na), en particulier les premières nervures d'accroche (N1), deuxièmes nervures d'accroche (N2), voire troisièmes nervures d'accroche (N3), est fixée à ladite au moins une bande (2) par soudure ou collage, de la nervure d'accroche (Na) sur la face externe de ladite au moins une bande convoyeuse.

10. Système de convoyage selon l'une des revendications 1 à 9, ladite au moins une nervure d'accroche (Na), en particulier les premières nervures d'accroche (N1), deuxièmes nervures d'accroche (N2), voire troisièmes nervures d'accroche, est fixée à ladite au moins une bande convoyeuse, sans perçage de ladite au moins une bande convoyeuse (2) et dudit au moins un support (4), en particulier lesdits moyens de fixation dudit au moins un support (4) à ladite au moins une bande convoyeuse (2) est dépourvu de d'organe de fixation tel que vis traversant ladite au moins une bande convoyeuse (2),ladite au moins une nervure (Na), ou encore ladite au moins un support (4).

11. Système selon l'une des revendications 1 à 10, dans lequel ladite au moins une bande convoyeuse (2), en particulier le premier couple de bandes convoyeuses, le deuxième couple de bandes convoyeuses, voire le troisième couple de bandes convoyeuses du système selon la revendication 2, et ladite nervure d'accroche (Na) sont en polyuréthane, dépourvues de concavité, formant une zone de rétention d'eau.

12. Procédé de convoyage de produits, mettant en œuvre un système de convoyage selon l'une des revendications 1 à 11 dans lequel les produits sont des produits alimentaires tels que des saucisses.

13. Procédé selon la revendication 12, mettant en œuvre ledit système de convoyage selon la revendication 7 qui est intercalé entre :
- une ligne de convoyage assurant une arrivée de produits longilignes alimentant la zone de chargement du système de convoyage en continu avec lesdits produits longilignes, d'une part, et
- un poste automatisé de mise en emballage des produits longilignes, tel qu'une thermoformeuse, fonctionnement en discontinu, d'autre part,
et dans lequel un automatisme du système de convoyage assure une commande des premiers supports (41), deuxième supports (42), voire troisièmes supports (43) de manière indépendante afin d'assurer une alimentation du poste automatisé de mise en emballage, en flux discontinu de produits longilignes en sortie de la zone de déchargement (ZD) à partir du flux continu de ladite ligne de convoyage alimentant la zone de chargement (ZC).

14. Procédé de nettoyage d'un système de convoyage selon la revendication 2 ou 3 comprenant :
- un démontage sans outil dudit au moins un support (4), par déplacement manuel des moyens de butées dans ladite position d'échappement et désolidarisation dudit au moins un support (4) de ladite au moins une bande convoyeuse (2) par extraction en coulissement de la nervure d'accroche (Na) de la rainure d'accroche (Ra)
- un nettoyage dudit au moins un support (4) et de ladite au moins une bande convoyeuse (2) dans l'état démonté dudit au moins un support (4) et de ladite au moins une bande convoyeuse (2).

15. Procédé de montage d'un système de convoyage selon la revendication 3 présentant :
- enfiler les deux nervures d'accroche (Na) du couple de bandes convoyeuses dans la rainure d'accroche du support (4) à fixer notamment le premier support (41), deuxième support (42) ou troisième support (43) par insertion des nervures au travers de l'extrémité longitudinale ouverte (EO),
- coulisser les nervures jusqu'à la position de verrouillage, en pressant vers le bas la bande convoyeuse, ou les bandes, destinées à venir en butée avec les butées saillantes pour assurer la fixation avec verrouillage de la position du support, puis relâcher la pression pour que les chants de bande se verrouillent sur les butées saillantes du support.

16. Procédé de démontage d'un système de convoyage selon la revendication 3 :
- exercer une pression sur la bande convoyeuse en contact avec les butées saillantes de manière à faire échapper les butées saillantes des chants du couple de bandes convoyeuses, et
- coulisser le support jusqu'à obtenir son démontage par extraction des nervures d'accroche de la rainure d'accroche.
